# EUROPÄISCHE PATENTSCHRIFT

(11) **EP 3 233 563 B1**
(45) Veröffentlichungstag und Bekanntmachung des Hinweises auf die Patenterteilung: **13.05.2020**
(21) Anmeldenummer: 15804546.8
(22) Anmeldetag: 04.12.2015
(51) Int. Cl.: B60N 2/07

(54) **ABDECKUNG FÜR EIN SCHIENENPAAR EINES LÄNGSVERSTELLBAREN FAHRZEUGSITZES SOWIE SCHIENENPAAR**
COVER FOR A PAIR OF SLIDING TRACKS OF A LONGITUDINALLY ADJUSTABLE VEHICLE SEAT AND A PAIR OF SLIDING TRACKS
RECOUVREMENT POUR UNE PAIRE DE RAILS DE GLISSIÈRE D'UN SIÈGE DE VÉHICULE RÉGLABLE LONGITUDINALEMENT ET PAIRE DE RAILS DE GLISSIÈRE

(30) Priorität: 16.12.2014 DE 102014226057
(43) Veröffentlichungstag der Anmeldung: 25.10.2017
(73) Patentinhaber: Adient Luxembourg Holding S.à r.l., 1855 Luxembourg (LU)
(72) Erfinder: QUAST, Ingo, 40477 Düsseldorf (DE); SPRENGER, Erik, 42929 Wermelskirchen (DE)
(74) Vertreter: Finger, Catrin
(86) Internationale Anmeldenummer: PCT/EP2015/078703
(87) Internationale Veröffentlichungsnummer: WO 2016/096486

(56) Entgegenhaltungen:
- EP-A2- 2 174 827
- JP-A- H 092 109

## Beschreibung

Die Erfindung betrifft ein Schienenpaar mit einer solchen Abdeckung gemäß dem Oberbegriff des Anspruchs 1 und eine Abdeckung für ein Schienenpaar gemäß dem Oberbegriff des Anspruchs 7.

Aus dem Stand der Technik sind Abdeckungen für Schienen von längsverschiebbaren Fahrzeugsitzen bekannt, wobei die Abdeckungen ein Eindringen von Fremdkörpern in die Schienen verhindern und ein Abdecken scharfer Kanten der Schienen sicherstellen.

Aus der JP H09 2109 A ist ein Stützelement für einen Betätigungshebel bekannt. Aus der EP 2 174 827 A2 ist ein Stützelement für eine Unterschiene bekannt.

Aufgabe der vorliegenden Erfindung ist es, eine gegenüber dem Stand der Technik verbesserte Abdeckung für ein Schienenpaar eines längsverschiebbaren Fahrzeugsitzes und ein verbessertes Schienenpaar mit einer solchen Abdeckung anzugeben.

Hinsichtlich des Schienenpaares wird die Aufgabe erfindungsgemäß durch die im Anspruch 1 angegebenen Merkmale und hinsichtlich der Abdeckung für ein Schienenpaar eines längsverstellbaren Fahrzeugsitzes durch die im Anspruch 10 angegebenen Merkmale gelöst.

Vorteilhafte Ausgestaltungen der Erfindung sind Gegenstand der Unteransprüche.

Hinsichtlich des Schienenpaares, das zumindest eine Unterschiene und eine relativ zur Unterschiene längsverschiebbare Oberschiene umfasst, wird die Aufgabe erfindungsgemäß dadurch gelöst, dass im Innenraum des Schienenpaares quer zur Längsausrichtung ein Versteifungselement angeordnet ist.

Die Aufgabe wird weiter erfindungsgemäß mit einer Abdeckung für eine Schiene eines längsverstellbaren Fahrzeugsitzes gelöst, wobei die Abdeckung ein Abdeckelement und ein, insbesondere zur Versteifung zumindest einer der Schiene ausgebildetes, integriertes Versteifungselement aufweist. Dabei ist an zumindest einem Ende des Schienenpaares ein Abdeckelement aufsteckbar, welches innen ein Versteifungselement aufweist, das im Innenraum des Schienenpaares quer zur Längsausrichtung anordenbar ist.

Die mit der Erfindung erzielten Vorteile bestehen insbesondere darin, dass durch das quer zur Längsausrichtung im Innenraum des Schienenpaares angeordnete Versteifungselement und insbesondere durch die Abdeckung mit einem solchen integrierten Versteifungselement ein Auffedern der Schiene, zum Beispiel der Oberschiene, in einer vorgegebenen Längsverstellposition minimiert, wobei eine Verformung der Oberschiene und eine daraus resultierende Spaltminderung zwischen den Seitenflanken einer Unterschiene und der Oberschiene vermieden ist. Eine mittels der Spaltminderung erhöhte Verschiebekraft, um die Oberschiene gegenüber der Unterschiene verschieben zu können, ist somit in der vorgegebenen Längsverstellposition nicht erforderlich. Weiterhin ist eine geringere Dimensionierung der Oberschiene, insbesondere eine geringere Materialstärke, möglich.

In einer möglichen Ausführungsform ist das Versteifungselement als ein geschlitztes Blech ausgebildet.

Eine andere Weiterbildung sieht vor, dass das Versteifungselement als ein Zug- oder Druckstab ausgebildet ist. Dabei wird das Versteifungselement beispielsweise beim Zusammenfedern der Schienenprofile infolge eines Gurtzuges oder Unfalls auf Druck oder Zug belastet, so dass die Flanken der Schienenprofile weniger stark belastet werden und somit der Spalt zwischen den Schienenprofilen beibehalten oder nur gering verändert wird.

In einer möglichen Ausführungsform umfasst das Versteifungselement einen stabförmigen Träger, von dem mindestens zwei Enden vertikal abragen. Im eingesetzten Zustand des Versteifungselements greifen die Enden in Aussparungen der Oberschiene ein und versteifen diese.

In einer alternativen Ausführungsform ragen von dem stabförmigen Träger mindestens vier Anformungen vertikal ab. Im eingesetzten Zustand des Versteifungselements greifen zwei, insbesondere die äußeren zwei der Anformungen in Aussparungen der Oberschiene ein und die anderen zwei, insbesondere die inneren zwei Anformungen stützen Seitenflanken der Oberschiene seitlich ab. Somit ermöglicht das Versteifungselement eine Versteifung der Oberschiene in Querrichtung und gleichzeitig eine seitliche Abstützung der Flanken der Oberschiene.

In einer weiteren Ausführungsform der Abdeckung ist das Abdeckelement T-förmig ausgebildet. Hierbei ist insbesondere das Ende des Schienenpaars nahezu vollständig abdeckbar, sodass zumindest ein Eindringen von Fremdkörpern und Schmutzpartikeln vermieden ist.

In einer Weiterbildung der Abdeckung sind das Abdeckelement und das Versteifungselement kraft- und/oder formschlüssig an der Oberschiene angeordnet und gehalten. Dabei sind die Abdeckung und das Versteifungselement derart an der Oberschiene angeordnet, dass die Oberschiene in Querrichtung versteift ist und zeitgleich eine Längsverschiebbarkeit der Oberschiene ermöglicht ist.

Eine mögliche Ausführungsform der Abdeckung sieht vor, dass das Versteifungselement auf einer Innenseite des Abdeckelements angeordnet ist. Beispielsweise ist das Versteifungselement auf einer Innenseite eines Bodens des Abdeckelements und von diesen abragend nach innen ins Schieneninnere weisend und in die Oberschiene eingreifend ausgebildet. Diese Position des Versteifungselements ermöglicht eine mechanische Festigkeit gegenüber Belastungen während der Längsverstellung.

Eine weitere Ausbildung der Abdeckung sieht vor, dass das Versteifungselement Seitenflanken der Oberschiene innenseitig und/oder außenseitig abstützt und gegebenenfalls umgreift. Des Weiteren weist das Versteifungselement einen sich in Querrichtung erstreckenden Träger auf, welcher zur Fixierung der Seitenflanken abstehende Anformungen aufweist. Somit können die Seitenflanken in Querrichtung in einfacher Art und Weise abgestützt werden. Insbesondere können die Seitenflanken der Oberschiene gegenüber Verformungen und Zusammendrücken der Ober- und Unterschiene gestützt werden.

In einer möglichen Ausführung der Abdeckung sind das Abdeckelement und das Versteifungselement form-, kraft- und/oder stoffschlüssig miteinander verbunden. Das Versteifungselement kann in vergleichsweise einfacher und kostengünstiger Weise nachträglich an eine herkömmliche Abdeckung ausgebildet werden. Alternativ sind das Abdeckelement und das Versteifungselement aus einem Formbauteil und somit einteilig ausgebildet. Beispielsweise ist das Formbauteil in einem Spritzgussverfahren hergestellt.

Des Weiteren kann das Versteifungselement aus Metall gebildet sein Das Abdeckelement kann aus Kunststoff gebildet sein.

Ein Schienenpaar, umfassend eine solche Abdeckung, ist insbesondere in einfacher Weise an eine Fahrzeugkarosserie montierbar. Zudem kann zumindest die Lebensdauer der Schienen erhöht werden, indem Verformungen der Schienen in Querrichtung mittels der Abdeckung vermindert werden.

In einer Weiterbildung des Schienenpaars ist die Abdeckung zumindest an einer Oberschiene form- und/oder kraftschlüssig angeordnet. Alternativ oder zusätzlich weist die Oberschiene zumindest eine mit einem Versteifungselement der Abdeckung korrespondierenden Aussparung auf. Dabei ist die Oberschiene während der Längsverstellung gegenüber in Querrichtung wirkenden mechanischen Belastungen versteift und stabilisiert. Zudem ist die Längsverschiebbarkeit der Oberschiene relativ zur Unterschiene uneingeschränkt ermöglicht.

Insbesondere kann die Abdeckung stirnseitig form- und/oder kraftschlüssig auf eine der Schienen angeordnet sein. Beispielsweise ist das Abdeckelement stirnseitig auf das Ende der Oberschiene steckbar und umgreift diese außenseitig.

Ausführungsbeispiele der Erfindung werden anhand von Zeichnungen näher erläutert. Dabei zeigen:
- Figur 1: schematisch in Seitenansicht einen Fahrzeugsitz, umfassend zumindest ein Schienenpaar,
- Figur 2: schematisch in Vorderansicht das Schienenpaar,
- Figur 3: schematisch in Vorderansicht ein Schienenpaar mit einem Ausführungsbeispiel einer Abdeckung,
- Figur 4: schematisch in Vorderansicht die in Figur 3 gezeigte Abdeckung ohne ein Abdeckelement,
- Figur 5: schematisch in Vorderansicht das Schienenpaar, wobei an der Oberschiene ein weiteres Ausführungsbeispiel eines Versteifungselements angeordnet ist,
- Figur 6: schematisch in Vorderansicht das Schienenpaar, wobei an der Oberschiene ein weiteres Ausführungsbeispiel eines Versteifungselements angeordnet ist,
- Figur 7: schematisch in Explosionsdarstellung eine Abdeckung und ein Versteifungselement in verschiedenen Ausführungen,
- Figur 8: schematisch in perspektivischer Darstellung eine alternative Ausführungsform für ein Versteifungselement, und
- Figur 9: schematisch in Explosionsdarstellung das Versteifungselement und die Oberschiene.

Einander entsprechende Teile sind in allen Figuren mit den gleichen Bezugszeichen versehen.

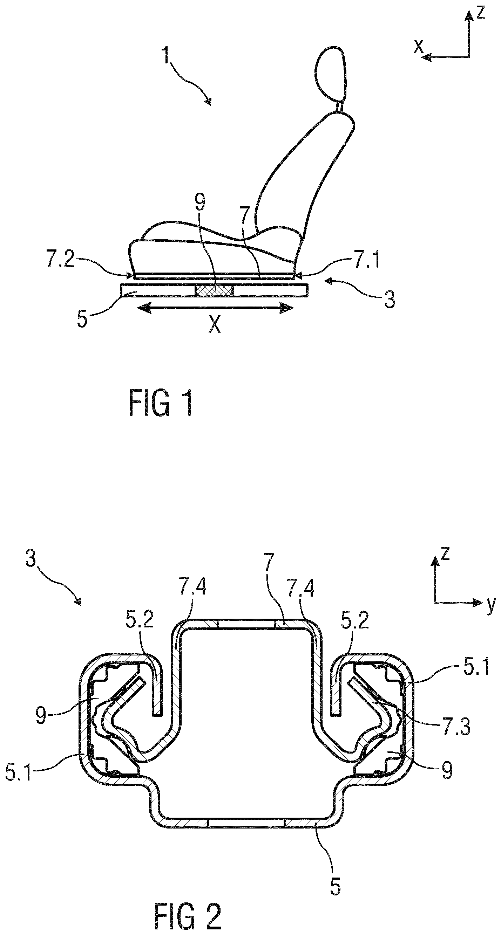

Figur 1 zeigt in Seitenansicht ein mögliches Ausführungsbeispiel eines Fahrzeugsitzes 1, umfassend zumindest ein Schienenpaar 3.

Eine Anordnung des Fahrzeugsitzes 1 im Fahrzeug wird dabei anhand des nachfolgend verwendeten Koordinatensystems definiert, umfassend eine einer Hochrichtung des Fahrzeugs zugeordneten Hochachse z, eine einer Längsrichtung des Fahrzeugs zugeordneten Längsachse x und eine einer Querrichtung des Fahrzeugs zugeordneten Querachse y.

Das Schienenpaar 3 ist zur Längsverschiebbarkeit des Fahrzeugsitzes 1 vorgesehen und umfasst eine Unterschiene 5 und eine gegenüber der Unterschiene 5 in Längsrichtung verschiebbare Oberschiene 7, welche am Fahrzeugsitz 1 angeordnet ist.

Die Unterschiene 5 ist dabei fahrzeugfest an einer Fahrzeugstruktur, beispielweise an einem Fahrzeugboden, angeordnet und weist in einem vorgegebenen Bereich in Längsrichtung ein die Oberschiene 7 lagerndes Lagerelement 9 auf.

Das Lagerelement 9 ist beispielsweise ein mehrere Kugeln umfassender Kugelkäfig, welcher mittels der Kugeln die Oberschiene 7 abstützt und die Längsverschiebbarkeit sicherstellt. Die Oberschiene 7 wird dabei nur im Bereich des Lagerelements 9 abgestützt. In einer Längsverstellposition, in welcher beispielweise der Fahrzeugsitz 1 in einer in Längsrichtung vorderen Endposition positioniert ist, ist ein hinteres Ende 7.1 der Oberschiene 7 im Bereich des Lagerelements 9 angeordnet, wobei ein vorderes Ende 7.2 der Oberschiene 7 einen definierten Abstand zum Lagerelement 9 aufweist. Entlang dieses Abstandes ist die Oberschiene 7 somit nicht durch das Lagerelement 9 abgestützt.

Figur 2 zeigt in Vorderansicht das Schienenpaar 3, umfassend die Unterschiene 5, die Oberschiene 7 und das Lagerelement 9.

Die Unterschiene 5 umfasst vier als Lagerelemente 9 ausgebildete Kugelkäfige, oder auch als Laufkäfige bezeichnet, mittels welchen die Oberschiene 7 auf vier Laufbahnen oder Abstützungen längsverschieblich gelagert ist.

Die Unterschiene 5 und die Oberschiene 7 umgreifen sich dabei gegenseitig mit ihren im Wesentlichen U-förmigen Profilen mit nach innen bzw. nach außen gebogenen Längsenden 5.1, 7.3, welche gegenüberliegende, senkrechte und im Wesentlichen parallel zueinander angeordnete Seitenflanken 5.2, 7.4 aufweisen.

Die Seitenflanken 5.2, 7.4 weisen vor einer Montage eine gegenläufige Winkelvorhaltung auf, d. h., die Profile sind in derartigen Winkeln umgeformt, dass die Seitenflanken 5.2, 7.4 nicht parallel zueinander angeordnet sind. Bei der Montage werden die Längsenden 5.1, 7.3 über einen Kontaktbereich zu den Kugeln des Lagerelements 9 herausgedrückt, so dass die Seitenflanken 5.2, 7.4 parallel zueinander ausgerichtet werden. So wird über eine definierte Vorspannung der Längsenden 5.1, 7.3 an den Lagerelementen 9 eine Verschiebekraft der Oberschiene 7 eingestellt.

In ungünstigen Längsverstellpositionen, welche einen großen Abstand zum Lagerelement 9 aufweisen, kann ein Profil der Oberschiene 7 nach außen auffedern und ein Profil der Unterschiene 5 nach innen einfedern. In Folge dessen kann es zu einer Spaltminimierung im Bereich der senkrechten Seitenflanken 5.2, 7.4 kommen. Dies tritt insbesondere bei langen Verstellwegen oder Verfahrwegen des Fahrzeugsitzes 1 und gleichzeitig kurzem Kugelkäfig auf und kann zu ungewollten Geräuschen, einem so genannten Touching, führen.

In einem Kollisionsfall, bei dem die Oberschiene 7 in Hochrichtung nach oben gezogen wird, einem so genannten Gurtzug, tritt im Allgemeinen ein derartiges Verformungsverhalten auf, dass die Seitenflanken 7.4 nach innen gedrückt werden.

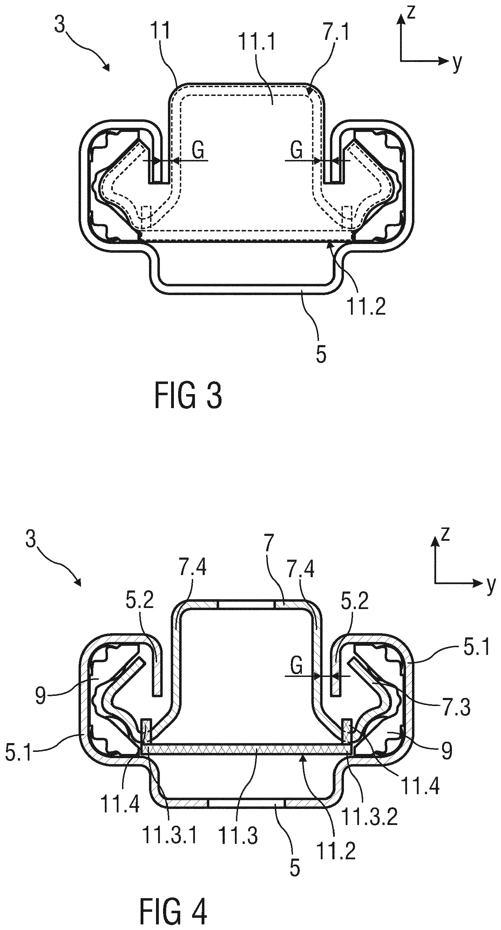

Figur 3 zeigt in Vorderansicht das Schienenpaar 3 mit einem Ausführungsbeispiel einer Abdeckung 11. Die Abdeckung 11 ist stirnseitig am Schienenpaar 3angeordnet und aufgesteckt. Insbesondere ist die Abdeckung 11 an der Oberschiene 7, insbesondere an dem Ende 7.1 der Oberschiene 7, angeordnet.

Die Abdeckung 11 ist in einer teiltransparenten Darstellung und in stark vereinfachter Weise gezeigt, wobei diese insbesondere einteilig ausgebildet ist. Die Abdeckung 11 umfasst ein Abdeckelement 11.1, welches vorgesehen ist, ein Eindringen von Fremdkörpern, beispielsweise von Schmutzpartikeln, in die Oberschiene 7 und teilweise in die Unterschiene 5 zu verhindern.

Das Abdeckelement 11.1 ist im Wesentlichen T-förmig ausgebildet, so dass die Oberschiene 7 nahezu vollständig abgedeckt ist. Das Abdeckelement 11.1 ist kraft- und/oder formschlüssig an der Oberschiene 7 angeordnet. Zum Beispiel ist das Abdeckelement 11.1 derart mittels einer Rastverbindung an der Oberschiene 7 anordbar, dass bei einem Verschieben der Oberschiene 7 gegenüber der Unterschiene 5 die Rastverbindung nicht beeinträchtigt wird.

Um ein in der Figur 2 beschriebenes Zusammendrücken der Seitenflanken 7.4 und eine Reduzierung des Spaltes G zwischen den Seitenflanken 7.4 und 5.2 der Schienen 7 bzw. 5 zu vermeiden und einer ungewollten Geräuschentwicklung bei einer Verschiebung des Fahrzeugsitzes 1 entgegenzuwirken, weist die Abdeckung 11 ein zur Versteifung der Oberschiene 7 ausgebildetes, integriertes Versteifungselement 11.2 auf, welches in einen Innenraum des Schienenpaars 3 hineinragt. Das Versteifungselement 11.2 ist als ein Zug- oder Druckstab ausgebildet. Darüber hinaus ist das Versteifungselement 11.2 quer zur Längsausrichtung X im Innenraum des Schienenpaares 3 angeordnet.

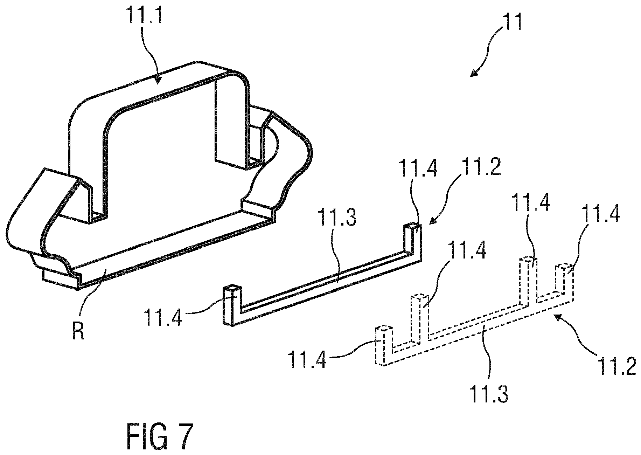

Das Abdeckelement 11.1 ist von außen auf die Stirnseite der Oberschiene 7 aufgesteckt. Dabei ragt das Abdeckelement 11.1 zumindest teilweise mit einem überstehenden Rand R in die Oberschiene 7 hinein (wie in Figur 7 dargestellt).

Dabei kann der Rand R des Abdeckelements 11.1 unterschiedlich weit in die Oberschiene 7 hineinragen. Beispielsweise ragt der untere Rand R oder der Boden des Abdeckelements 11.1 unterhalb des Schienenbodens der Oberschiene 7 weiter in diese hinein als die oberen oder seitlichen Ränder R des Abdeckelements 11.1. Im Bodenbereich weist das Abdeckelement 11.1 in nicht näher dargestellter Art und Weise Aufnahmen für das integrierte Versteifungselement 11.2 auf, welches form-, stoff- und/oder kraftschlüssig in diesen Aufnahmen gehalten ist. Alternativ kann das Versteifungselement 11.2 und das Abdeckelement 11.1 ein Formbauteil sein, wobei das Versteifungselement 11.2 auf der Innenseite des Bodens des Abdeckelements 11.1 ausgeformt, insbesondere abragend ausgeformt ist. Insbesondere kann das Versteifungselement 11.2 und das Abdeckelement 11.1 als ein einteiliges Spritzgussformbauteil ausgebildet sein.

Das Versteifungselement 11.2 ist beispielsweise als ein Einlegeteil aus einem metallischen Werkstoff ausgebildet und ist nachträglich in das Abdeckelement 11.1 eingesetzt. Dazu weist das Abdeckelement 11.1 beispielsweise einen mit dem Einlegeteil korrespondierenden Einschub auf. Auch ist es möglich, dass das Einlegeteil Rastelemente umfasst, welche in mit diesen korrespondierenden Rastlöchern des Abdeckelements 11.1 einrasten und eine Befestigung des Versteifungselements 11.2 am Abdeckelement 11.1 ermöglichen. Die Abdeckung 11 ist dabei mehrteilig ausgebildet.

Um einer kollisionsbedingten Verlagerung, insbesondere einer Verlagerung in Hochrichtung, des Versteifungselements 11.2 entgegenzuwirken, ist der Einschub oder sind die Rastelemente für das Versteifungselement 11.2 derart ausgebildet, dass eine Lagefixierung desselben sichergestellt ist. Beispielsweise weisen die Rastelemente in Hochrichtung eine Anzahl von Rasthaken auf, welche bei Anordnung des Versteifungselements 11.2 in den Rastlöchern des Abdeckelements 11.1 einrasten und das Versteifungselement 11.2 in einer vorgegebenen Position halten.

In einem weiteren Ausführungsbeispiel ist das als Metallteil ausgebildete Versteifungselement 11.2 bereits während eines Urformens, beispielsweise in einem Spritzgussverfahren, an das Abdeckelement 11.1 angeformt worden, insbesondere ist das Versteifungselement 11.2 mit einem zur Herstellung des Abdeckelements 11.1 verwendeten Kunststoff umspritzt, wobei die Abdeckung 11 somit einteilig ausgebildet ist.

In einem anderen Ausführungsbeispiel ist eine Federkraft des Profils der Oberschiene 7, beispielsweise aufgrund eines hochfesten Materials der Oberschiene 7, derart gering, dass das als Metallteil ausgebildete Versteifungselement 11.2 nicht erforderlich ist. Dabei ist es möglich, dass lediglich die Abdeckung 11 an der Oberschiene 7 angeordnet ist, wobei eine Last vollständig von der als Kunststoffkappe ausgebildeten Abdeckung 11 aufnehmbar ist.

Figur 4 zeigt in Vorderansicht die in Figur 3 gezeigte Abdeckung 11 ohne das Abdeckelement 11.1.

Das Versteifungselement 11.2 ist in hier nicht dargestellten Aussparungen des jeweiligen Endes 7.1, 7.2 der Oberschiene 7 angeordnet. Dazu weist das Versteifungselement 11.2 einen sich in Querrichtung Y erstreckenden Träger 11.3 auf, welcher an seinen Enden 11.3.1, 11.3.2 zumindest zwei mit den Aussparungen der Oberschiene 7 korrespondierende und im Wesentlichen vom Träger 11.3 abstehende Anformungen 11.4 oder Abstützelemente umfasst. Die Anformungen 11.4 sind beispielsweise bolzenförmig oder rippenförmig oder stegförmig ausgebildet. Die Aussparungen bzw. die Anformungen 11.4 stützen hierbei die Seitenflanken 7.4 der Oberschiene 7 von einer Außenseite.

Da auf den Träger 11.3 eine Zugkraft ausgeübt wird, ist das Versteifungselement 11.2 somit als ein Zugelement, insbesondere ein Zugstab oder Zugstrebe ausgebildet und versteift oder stabilisiert die Oberschiene 7, insbesondere die Enden 7.1, 7.2, derart, dass die Anformungen 11.4 insbesondere einer in Querrichtung nach außen wirkenden Kraft entgegenwirken. Die nach außen wirkende Kraft auf die Seitenflanken 7.4 wird beispielsweise bei einer Stauchung der Schienen in Hochrichtung erzeugt (Kraft oder Druck von oben auf die Oberschiene 7). Alternativ kann das Versteifungselement 11.2 als ein Druckstab ausgebildet sein.

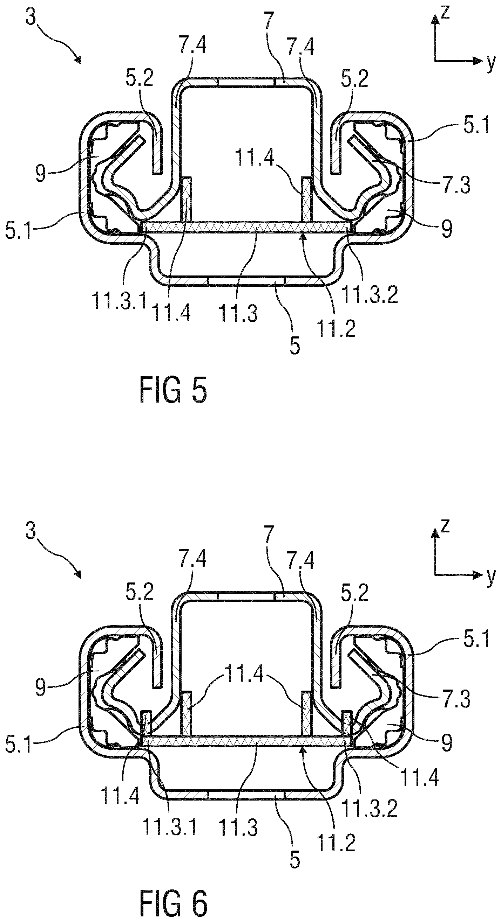

Figur 5 zeigt in Vorderansicht das Schienenpaar 3, wobei an der Oberschiene 7 ein weiteres Ausführungsbeispiel eines Versteifungselements 11.2 angeordnet ist.

Im Gegensatz zu dem in den Figuren 3 und 4 gezeigten Ausführungsbeispiel stützt das Versteifungselement 11.2 die Seitenflanken 7.4 innenseitig. Dazu weisen die Aussparungen bzw. die Anformungen 11.4 einen geringeren Abstand zueinander auf.

Aufgrund der Abstützung der Innenseiten der Seitenflanken 7.4 wird, beispielsweise in einem Kollisionsfall, über die Anformungen 11.4 auf den Träger 11.3 eine Druckkraft ausgeübt, so dass das Versteifungselement 11.2 als ein Druckelement ausgebildet ist. Mittels des Eingriffs des Versteifungselements 11.2 in die Aussparungen der Oberschiene 7 wird diese, insbesondere die Enden 7.1, 7.2 der Oberschiene 7, derart versteift oder stabilisiert, dass die Anformungen 11.4 des Versteifungselements 11.2 einer insbesondere in Querrichtung nach innen wirkenden Kraft entgegenwirken. Die nach innen wirkende Kraft ist beispielsweise eine Abschälkraft, bei der eine Streckung der Schienen in Hochrichtung erzeugt wird (= ein so genannter Peel-Strength-Lastfall, bei welchem die Kraft die Oberschiene 7 noch oben zieht).

Figur 6 zeigt in Vorderansicht das Schienenpaar 3, wobei ein weiteres Ausführungsbeispiel eines Versteifungselements 11.2 dargestellt ist, welches an der Oberschiene 7 angeordnet ist.

Im Gegensatz zu den in den Figuren 3 bis 5 gezeigten Ausführungsbeispielen stützt das Versteifungselement 11.2 hier die Seitenflanken 7.4 der Oberschiene 7 sowohl von der Innenseite als auch von der Außenseite. Dazu weist das Versteifungselement 11.2 vier Anformungen 11.4 auf, welche in mit diesen korrespondierenden Aussparungen der Oberschiene 7 eingreifen. Die äußeren Aussparungen in der Oberschiene 7 sind dabei in einem Biegebereich zwischen den Seitenflanken 7.4 und den Längsenden 7.3 angeordnet. Die vier Anformungen 11.4 ragen mittels einer vorgegebenen Länge in die Oberschiene 7 hinein. Somit ist das Verringern des Auffederns der Oberschiene 7 nicht nur an den jeweiligen Enden 7.1, 7.2, sondern auch in der Oberschiene 7 möglich.

Figur 7 zeigt schematisch in Explosionsdarstellung die Abdeckung 11 mit dem nach innen weisenden Rand R und das Versteifungselement 11.2 in zwei verschiedenen Ausführungsformen.

Dabei können die Anformungen 11.4 des Versteifungselements 11.2 unterschiedlich lang ausgebildet sein. Insbesondere sind die äußeren Anformungen 11.4, die in Aussparungen der Oberschiene 7 eingreifen kürzer ausgebildet, als die inneren Anformungen 11.4, die seitlich die Seitenflanken 7.4 der Oberschiene 7 abstützen.

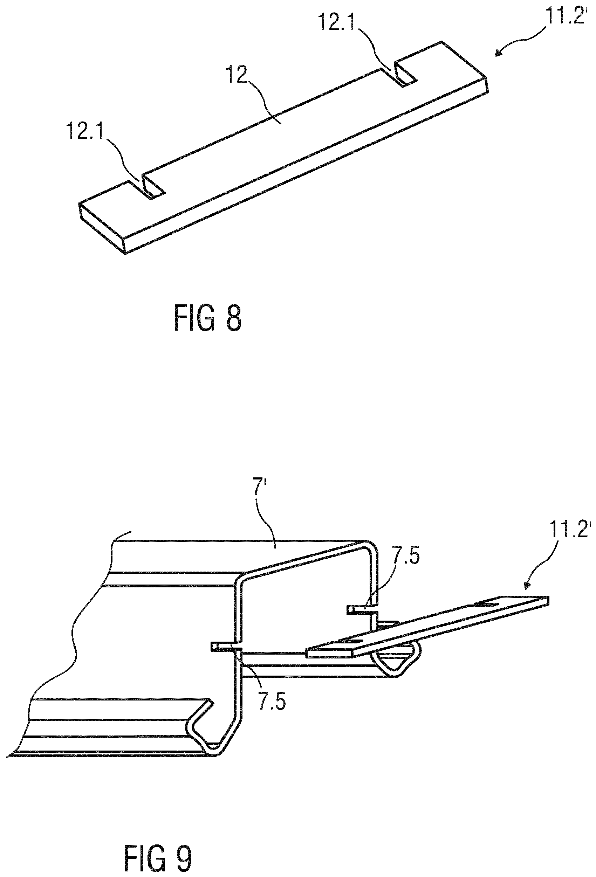

Figur 8 zeigt schematisch in perspektivischer Darstellung eine besonders einfache Ausführungsform für ein Versteifungselement 11.2'. Das Versteifungselement 11.2' ist als ein geschlitztes Formteil 12 ausgebildet, welches zumindest zwei Schlitze 12.1 aufweist.

Das geschlitzte Formteil 12 ist beispielsweise aus Metall gefertigt. Alternativ kann es Kunststoff, insbesondere aus einem faserverstärktem Kunststoff gebildet sein.

Figur 9 zeigt schematisch in Explosionsdarstellung das alternative Versteifungselement 11.2' und die dazugehörige und entsprechend ausgebildete Oberschiene 7'. Zur Aufnahme des alternativen Versteifungselements 11.2' weist die Oberschiene 7' stirnseitig eingebrachte Aufnahmeschlitze 7.5 auf, in welche die Schlitze 12.1 des Formteils 12 einführbar sind. Mit anderen Worten: Das Formteil 12 greift mit den Schlitzen 12.1 in die Aufnahmeschlitze 7.5 der Oberschiene 7' ein.

Auf das an der Oberschiene 7' gehaltene Formteil 12 wird dann die stirnseitige Abdeckung 11 aufgesetzt, wobei diese miteinander form- und/oder kraftschlüssig verbunden werden, beispielsweise über Reibschluss oder Kraftschluss oder eine Rastverbindung.

### Bezugszeichenliste

- 1: Fahrzeugsitz
- 3: Schienenpaar
- 5: Unterschiene
- 5.1: Längsende
- 5.2: Seitenflanke
- 7: Oberschiene
- 7': alternative Oberschiene
- 7.1: Hinteres Ende
- 7.2: Vorderes Ende
- 7.3: Längsende
- 7.4: Seitenflanke
- 7.5: Aufnahmeschlitz
- 9: Lagerelement
- 11: Abdeckung
- 11.1: Abdeckelement
- 11.2: Versteifungselement
- 11.2': alternatives Versteifungselement
- 11.3: Träger
- 11.3.1: Ende (Träger)
- 11.3.2: Ende (Träger)
- 11.4: Anformung
- 12: Formteil
- 12.1: Schlitz

- G: Spalt
- R: Rand

- x: Längsachse
- X: Längsausrichtung
- y: Querachse
- z: Hochachse

## Patentansprüche

1. Schienenpaar (3) eines längsverstellbaren Fahrzeugsitzes (1), umfassend zumindest eine Unterschiene (5) und eine relativ zur Unterschiene (5) längsverschiebbare Oberschiene (7),
**dadurch gekennzeichnet, dass** im Innenraum (13) des Schienenpaares (3) quer zur Längsausrichtung (X) ein Versteifungselement (11.2) angeordnet ist, wobei das Versteifungselement (11.2) Seitenflanken der Oberschiene (7) innen- und/oder außenseitig abstützt.

2. Schienenpaar (3) nach Anspruch 1,
**dadurch gekennzeichnet, dass** das Versteifungselement (11.2) als ein Zug- oder Druckstab ausgebildet ist.

3. Schienenpaar (3) nach Anspruch 1 oder 2,
**dadurch gekennzeichnet, dass** das Versteifungselement (11.2) als ein geschlitztes Blech ausgebildet ist.

4. Schienenpaar (3) nach Anspruch 1 oder 2,
**dadurch gekennzeichnet, dass** das Versteifungselement (11.2) einen stabförmigen Träger (11.3) umfasst, von dem mindestens zwei Anformungen (11.4) vertikal abragen.

5. Schienenpaar (3) nach Anspruch 4,
**dadurch gekennzeichnet, dass** im eingesetzten Zustand des Versteifungselements (11.2) die Anformungen (11.4) in Aussparungen (12) der Oberschiene (7) eingreifen.

6. Schienenpaar (3) nach Anspruch 1 oder 2,
**dadurch gekennzeichnet, dass** von dem stabförmigen Träger (11.3) mindestens vier Anformungen (11.4) vertikal abragen.

7. Schienenpaar (3) nach Anspruch 6,
**dadurch gekennzeichnet, dass** im eingesetzten Zustand des Versteifungselements (11.2) zwei der Anformungen (11.4) in Aussparungen (12) der Oberschiene (7) eingreifen und die anderen zwei Anformungen (11.4) Seitenflanken (7.4) der Oberschiene seitlich abstützen.

8. Abdeckung (11) für ein Schienenpaar (3) eines längsverstellbaren Fahrzeugsitzes (1), umfassend zumindest eine Unterschiene (5) und eine relativ zur Unterschiene (5) längsverschiebbare Oberschiene (7), **gekennzeichnet durch**
- ein an zumindest einem Ende (7.1, 7.2) des Schienenpaares (3) aufsteckbares Abdeckelement (11.1), welches innen ein Versteifungselement (11.2) aufweist, das im Innenraum (13) des Schienenpaares (3) quer zur Längsausrichtung (X) anordenbar ist, wobei das Versteifungselement (11.2) Seitenflanken der Oberschiene (7) innen- und/oder außenseitig abstützt.

9. Abdeckung (11) nach Anspruch 8,
**dadurch gekennzeichnet, dass** das Versteifungselement (11.2) auf einer Innenseite des Abdeckelements (11.1) angeordnet ist.

10. Abdeckung (11) nach Anspruch 8 oder 9,
wobei das Abdeckelement (11.1) und das Versteifungselement (11.2) form-, stoff- und/oder kraftschlüssig miteinander verbunden sind.

11. Abdeckung (11) nach einem der Ansprüche 8 bis 10,
wobei das Abdeckelement (11.1) und das Versteifungselement (11.2) einteilig ausgebildet sind.

12. Abdeckung (11) nach einem der Ansprüche 8 bis 11,
wobei das Abdeckelement (11.1) und das Versteifungselement (11.2) als ein Formbauteil, insbesondere ein Spritzgussformbauteil, ausgebildet sind.

13. Abdeckung (11) nach einem der Ansprüche 8 bis 12,
**dadurch gekennzeichnet, dass** das Versteifungselement (11.2) aus Metall gebildet ist.

14. Abdeckung (11) nach einem der Ansprüche 8 bis 13,
**dadurch gekennzeichnet, dass** das Abdeckelement (11.1) aus Kunststoff gebildet ist.

15. Abdeckung (11) nach einem der Ansprüche 8 bis 14,
**dadurch gekennzeichnet, dass** das Abdeckelement (11.1) stirnseitig auf das Ende der Oberschiene (7) steckbar ist und die Oberschiene (7) außenseitig umgreift.

## Claims

1. Rail pair (3) of a longitudinally adjustable vehicle seat (1) comprising at least one bottom rail (5) and one top rail (7) which is longitudinally movable relative to the bottom rail (5), **characterized in that** a stiffening element (11.2) is arranged in the interior (13) of the rail pair (3) transversely to the longitudinal orientation (X), wherein the stiffening element (11.2) supports side flanks of the top rail (7) on the inner face and/or on the outer face.

2. Rail pair (3) according to Claim 1, **characterized in that** the stiffening element (11.2) is configured as a tension bar or compression bar.

3. Rail pair (3) according to Claim 1 or 2, **characterized in that** the stiffening element (11.2) is configured as a slotted metal plate.

4. Rail pair (3) according to Claim 1 or 2, **characterized in that** the stiffening element (11.2) comprises a bar-shaped supporting member (11.3), at least two integrally shaped portions (11.4) protruding vertically therefrom.

5. Rail pair (3) according to Claim 4, **characterized in that** in the inserted state of the stiffening element (11.2) the integrally shaped portions (11.4) engage in recesses (12) of the top rail (7).

6. Rail pair (3) according to Claim 1 or 2, **characterized in that** at least four integrally shaped portions (11.4) protrude vertically from the bar-shaped supporting member (11.3).

7. Rail pair (3) according to Claim 6, **characterized in that** in the inserted state of the stiffening element (11.2), two of the integrally shaped portions (11.4) engage in recesses (12) of the top rail (7) and the other two integrally shaped portions (11.4) laterally support side flanks (7.4) of the top rail.

8. Cover (11) for a rail pair (3) of a longitudinally adjustable vehicle seat (1), comprising at least one bottom rail (5) and one top rail (7) which is longitudinally movable relative to the bottom rail (5), **characterized by**
- a cover element (11.1) which is able to be placed on at least one end (7.1, 7.2) of the rail pair (3), said cover element internally having a stiffening element (11.2) which is able to be arranged in the interior (13) of the rail pair (3) transversely to the longitudinal orientation (X), wherein the stiffening element (11.2) supports side flanks of the top rail (7) on the inner face and/or on the outer face.

9. Cover (11) according to Claim 8, **characterized in that** the stiffening element (11.2) is arranged on an inner face of the cover element (11.1).

10. Cover (11) according to Claim 8 or 9, wherein the cover element (11.1) and the stiffening element (11.2) are connected together by a form-fit, material bond and/or force-fit.

11. Cover (11) according to one of Claims 8 to 10, wherein the cover element (11.1) and the stiffening element (11.2) are configured in one piece.

12. Cover (1) according to one of Claims 8 to 11, wherein the cover element (11.1) and the stiffening element (11.2) are configured as a molded component, in particular an injection-molded component.

13. Cover (11) according to one of Claims 8 to 12, **characterized in that** the stiffening element (11.2) is formed from metal.

14. Cover (11) according to one of Claims 8 to 13, **characterized in that** the cover element (11.1) is formed from plastics.

15. Cover (11) according to one of Claims 8 to 14, **characterized in that** the cover element (11.1) is able to be placed on the front face of the end of the top rail (7) and encompasses the top rail (7) on the outer face.

## Revendications

1. Paire de rails (3) d'un siège de véhicule réglable en longueur (1), comprenant au moins un rail inférieur (5) et un rail supérieur (7) déplaçable longitudinalement par rapport au rail inférieur (5),
**caractérisée en ce que** dans l'espace intérieur (13) de la paire de rails (3) est disposé transversalement à la direction longitudinale (X) un élément de renforcement (11.2), l'élément de renforcement (11.2) supportant du côté intérieur et/ou extérieur des flancs latéraux du rail supérieur (7).

2. Paire de rails (3) selon la revendication 1,
**caractérisée en ce que** l'élément de renforcement (11.2) est réalisé sous forme de barres de traction ou de pression.

3. Paire de rails (3) selon la revendication 1 ou 2,
**caractérisée en ce que** l'élément de renforcement (11.2) est réalisé sous forme de tôle fendue.

4. Paire de rails (3) selon la revendication 1 ou 2,
**caractérisée en ce que** l'élément de renforcement (11.2) comprend un support en forme de barre (11.3) depuis lequel font saillie verticalement au moins deux pièces saillantes (11.4).

5. Paire de rails (3) selon la revendication 4,
**caractérisée en ce que** les pièces saillantes (11.4) s'engagent dans des évidements (12) du rail supérieur (7) dans l'état inséré de l'élément de renforcement (11.2).

6. Paire de rails (3) selon la revendication 1 ou 2,
**caractérisée en ce qu'**au moins quatre pièces saillantes (11.4) font saillie verticalement depuis le support en forme de barre (11.3).

7. Paire de rails (3) selon la revendication 6,
**caractérisée en ce que** dans l'état inséré de l'élément de renforcement (11.2), deux des pièces saillantes (11.4) s'engagent dans des évidements (12) du rail supérieur (7) et les deux autres pièces saillantes (11.4) supportent latéralement des flancs latéraux (7.4) du rail supérieur.

8. Recouvrement (11) pour une paire de rails (3) d'un siège de véhicule réglable en longueur (1), comprenant au moins un rail inférieur (5) et un rail supérieur (7) déplaçable longitudinalement par rapport au rail inférieur (5),
**caractérisé par**
- un élément de recouvrement enfichable (11.1) au niveau d'au moins une extrémité (7.1, 7.2) de la paire de rails (3), qui présente à l'intérieur un élément de renforcement (11.2), lequel peut être disposé dans l'espace intérieur (13) de la paire de rails (3) transversalement à la direction longitudinale (X), l'élément de renforcement (11.2) supportant des flancs latéraux du rail supérieur (7) du côté intérieur et/ou extérieur.

9. Recouvrement (11) selon la revendication 8,
**caractérisé en ce que** l'élément de renforcement (11.2) est disposé sur un côté intérieur de l'élément de recouvrement (11.1).

10. Recouvrement (11) selon la revendication 8 ou 9,
dans lequel l'élément de recouvrement (11.1) et l'élément de renforcement (11.2) sont connectés l'un à l'autre par engagement par correspondance de formes, par liaison de matière et/ou par force.

11. Recouvrement (11) selon l'une quelconque des revendications 8 à 10,
dans lequel l'élément de recouvrement (11.1) et l'élément de renforcement (11.2) sont réalisés d'une seule pièce.

12. Recouvrement (11) selon l'une quelconque des revendications 8 à 11,
dans lequel l'élément de recouvrement (11.1) et l'élément de renforcement (11.2) sont réalisés sous forme de composants moulés, en particulier sous forme de composants moulés par injection.

13. Recouvrement (11) selon l'une quelconque des revendications 8 à 12,
**caractérisé en ce que** l'élément de renforcement (11.2) est formé de métal.

14. Recouvrement (11) selon l'une quelconque des revendications 8 à 13,
**caractérisé en ce que** l'élément de recouvrement (11.1) est formé de plastique.

15. Recouvrement (11) selon l'une quelconque des revendications 8 à 14,
**caractérisé en ce que** l'élément de recouvrement (11.1) peut être enfiché du côté frontal sur l'extrémité du rail supérieur (7) et vient en prise autour du rail supérieur (7) du côté extérieur.
